# EUROPEAN PATENT SPECIFICATION

(11) **EP 0 371 080 B1**
(45) Date of publication and mention of the grant of the patent: **28.06.1995**
(21) Application number: 89900130.9
(22) Date of filing: 23.11.1988
(51) Int. Cl.: B32B 1/00, B32B 3/00

(54) **STRETCH FILM WITH AUXILIARY BAND**
ELASTISCHER FILM MIT HILFSBAND
FILM ELASTIQUE A BANDE AUXILIAIRE

(30) Priority: 25.11.1987 US 125574
(43) Date of publication of application: 06.06.1990
(73) Proprietor: J.C. PARRY & SONS COMPANY, INCORPORATED, Baltimore, MD 21227 (US)
(72) Inventor: PARRY, John, C., Severna, MD 21146 (US)
(74) Representative: Brunner, Michael John
(86) International application number: PCT/US88/04098
(87) International publication number: WO 89/04759

(56) References cited:
- DE-A- 2 434 248
- US-A- 4 386 124
- US-A- 4 499 706

## Description

This invention relates to a material for wrapping a pallet or like object,

Various stretch films are available today for wrapping diverse packages and other goods. One important use of stretch films is to wrap pallets of stacked boxes or the like. In such processes, a pallet of containers is wrapped with several turns of a stretch film of substantial width and many various techniques for doing so are known. The stretch film used is capable of substantial elongation, and by maintaining the film under adequate tension as it is passed around a pallet, not only does the film conform to corners and other irregularities, but it also remains under tension to tightly retain the containers against one another and upon the pallet. Sharp corners and the like can, however, tear the film, and to avoid this one must be judicious in applying tension to the film particularly when negotiating such corners. Stretch films are generally transparent and non-descript. They are difficult or impossible to print upon; when printing can be done, the printing process may approximately double the cost of the film.

U.S. Patent 4,499,706 to Scheller indicates an awareness of the problem of film tearing at corners and provides, to resist such tears, a tube of film that is tucked in at its edges to provide extra layers of film at the points most likely to encounter container corners. To avoid tears, one can use film of greater thickness, but this necessarily increases costs and the amount of tension needed to produce a desirable degree of elongation.

US-A-4386124 discloses a wrapping material for bags and formed of two coextensive mono-axially stretched films which are adhered together with their stretch axes crossing one another. This wrapping is not a stretch wrapping.

The cited US-A-4499706 document also discloses a stretch wrapping, for wrapping pallets of stacked boxes and the like, comprising a primary stretch film of a given gauge and lateral width reinforced with a secondary stretch film. According to a first aspect of the present invention, such a known stretch wrapping is characterised in that the secondary film is provided by at least one auxiliary band having lesser lateral width than the primary film, and being laminated thereto.

"Laminating", as used herein, means placing one layer against another in such a way that some adherence between layers results. The materials may have sufficient natural cling that no adhesive or the like is necessary. However, we presently prefer to treat at least one side of the band material by coating it with a thin film of a colourless, odourless liquid isobutylene having a specific gravity of from 0.871 to 0.887, which produces a strong clinging effect when the layers are placed together at 15.5° Centigrade as measured by ASTM test D-1298. Other tacky substances or adhesives may be used, and we refer to these collectively as "adherents" in the claims below.

We have found that one can obtain the advantages of heavy gauge or laminated film by providing a film of standard thickness with an additional band of film which can be of the same thickness, or it can be of different gauge, particularly greater gauge, or of different material. Additionally, the band may have visual characteristics such as colour or printed indicia for identifying the goods, or the shipper, or for other purposes. The economic advantages of the invention are particularly significant when the band is imprinted, because one may imprint a single roll of material and sever it into many bands each suitable for laminating with a standard unprinted film.

Thus, it is desirable if the primary film is transparent and the band material is visually distinct from the primary film to provide a visual indication. The band may be opaque and/or coloured and/or imprinted e.g. with identifying characters or with spaced geometric figures, such as rectangles, whose deformation can be observed during stretching of the band to estimate its degree of elongation.

According to a second aspect of the present invention a roll of stretch film of a first width has at least one band of reinforcing film wound thereinto, wherein the band position, widthwise of the primary film, is varied continuously over substantially the entire width of the primary film so that the composite roll has a substantially uniform diameter.

According to a third aspect of the present invention a method of laminating and reeling stretch film with an auxiliary band comprises the steps of passing at least one primary stretch film having a first width from a film source to a take-up reel, and simultaneously passing an auxiliary film band having a second width substantially narrower than the first width from a band source to the take-up reel so that the primary film and the band are wound together, while continuously traversing the band across the width of the primary film so as to distribute evenly the thickness of the band over the width of the reeled film.

The invention may be practised with numerous combinations of substrate and banding material, whose choice will be dependent upon the contemplated end use for the product. The following examples set forth presently preferred embodiments of the invention.

### COMPARATIVE EXAMPLE

A wooden pallet was stacked with cardboard shipping cartons to a height of 1.2m (four feet). The pallet and cartons were wrapped with four layers of 15»m (60-gauge) stretch film of linear low density polyethylene. During application, the film was maintained under tension sufficient to produce 100% elongation. To simulate a tear of the type that can occur during handling, the wrapping was cut through with a small knife, near its lower edge. Beginning at the cut, a tear rapidly propagated across the width of the wrapping, destroying its integrity.

### EXAMPLE I

The film wrapping was removed from the pallet and carton assembly of the comparative example. Film identical to that in the comparative example, laminated to a 0.05m (two inch) wide reinforcing band of 20»m (80-gauge) film of polyethylene, was wrapped around the pallet and carton assembly as in the comparative example. Tension was maintained sufficient to produce the same degree of elongation as in the comparative example. When the film was cut, tears propagated across its width only as far as the reinforcing band, thus illustrating the effectiveness of the band.

### EXAMPLE II

A 0.75m (thirty inch) wide roll of bright red 25»m (100-gauge) polyethylene film was severed into thirty rolls, each 0.025m (one inch) wide. Material from each of the resulting narrow rolls was rewound into a 0.5m (twenty inch) roll of transparent 15»m (60-gauge) polyethylene film. When subjected to the tear resistance test of the comparative example, results similar to those in Example I were noted. Furthermore, the band, clearly visible through the transparent film, readily distinguished the pallet load from others.

### EXAMPLE III

A 0.75m (thirty inch), wide roll of 25»m (100-gauge) polyethylene film whose surface was specially treated to receive printing was imprinted with 15 identical columns of bold Helvetica lettering identifying a shipper. The direction of the printing was periodically reversed, to make the orientation thereof unimportant in use. This roll was then severed into fifteen 0.05m (two inch) wide rolls, each of which was laminated to a 0.5m (twenty inch) wide roll of stretch film identified in the comparative example.

The printing was readily detectable in the finished product from a distance, even though the film had been stretched 100%, i.e., to twice its original length.

### EXAMPLE IV

A roll of 25»m (100-gauge) polyethylene film was imprinted with an array of rectangles. Each rectangle had a width, across the width of the film, approximately twice that of its length. The roll was cut into narrow rolls as in the previous example, and rewound into a roll of polyethylene stretch film of the type used in the comparative example. The laminate was then used to stretch-wrap a pallet load as before. When stretched, the rectangles on the band grew lengthwise and shrank widthwise. This deformation enabled the person applying the film accurately to estimate the amount of film elongation.

In examples II, III and IV, the visual distinctiveness of the narrow band readily enabled the worker to locate the end of the stretch film on the reel at the beginning of the wrapping process.

The foregoing examples by no means are exhaustive of the applicability of the invention. Any of other various wrapping materials, including polypropylene, PVC, and polyurethane may be used for the auxiliary bands, and likewise, materials other than polyethylene may be used for the substrate. In the examples, previously wound films are rewound together; however, one or both of the bands could be laminated to the other right out of a film extruder.

## Claims

1. A stretch wrapping, for wrapping pallets of stacked boxes and the like, comprising a primary stretch film of a given gauge and lateral width reinforced with a secondary stretch film; characterised in that the secondary film is provided by at least one auxiliary band having lesser lateral width than the primary film, and being laminated thereto.

2. A wrapping according to claim 1, wherein the band material has a gauge greater than that of the primary film.

3. A wrapping according to claim 1 or claim 2, wherein the primary film is transparent and the band material is visually distinct from the primary film to provide a visual indication.

4. A wrapping according to claim 3, wherein at least a portion of the band is opaque.

5. A wrapping according to claim 3 or claim 4, wherein the band is coloured.

6. A wrapping according to any one of claims 3 to 5, wherein the band is imprinted.

7. A wrapping according to claim 6, wherein the band is imprinted with identifying characters.

8. A wrapping according to claim 6, wherein the band is imprinted with spaced geometric figures, whose deformation can be observed during stretching of the band to estimate its degree of elongation.

9. A wrapping according to claim 8, wherein the geometric figures are rectangles.

10. A wrapping according to any one of the preceding claims, further comprising an adherent substance for causing the bands to promote adhesion to the primary film.

11. A roll of stretch film of a first width having at least one band of reinforcing film wound thereinto, wherein the band position, widthwise of the primary film, is varied continuously over substantially the entire width of the primary film so that the composite roll has a substantially uniform diameter.

12. A method of laminating and reeling stretch film with an auxiliary band comprising the steps of passing at least one primary stretch film having a first width from a film source to a take-up reel, and simultaneously passing an auxiliary film band having a second width substantially narrower than the first width from a band source to the take-up reel so that the primary film and the band are wound together, while continuously traversing the band across the width of the primary film so as to distribute evenly the thickness of the band over the width of the reeled film.

## Patentansprüche

1. Ein elastisches Hüllmaterial zum Umhüllen von Paletten gestapelter Kisten o.ä., die eine primäre elastische Folie bestimmter Stärke und Breite, verstärkt mit einer sekundären elastischen Folie, umfaßt; **dadurch gekennzeichnet**, daß die sekundäre Folie durch mindestens ein Hilfsband vorgesehen ist, das eine geringere Breite als die primäre Folie aufweist und auf diese laminiert ist.

2. Ein Hüllmaterial nach Anspruch 1, bei der das Bandmaterial eine Stärke größer als die der primären Folie aufweist.

3. Ein Hüllmaterial nach Anspruch 1 oder 2, bie der die primäre Folie durchsichtig und das Bandmaterial visuell von der primären Folie unterscheidbar ist, um eine visuelle Anzeige zu ermöglichen.

4. Ein Hüllmaterial nach Anspruch 3, bei der wenigstens ein Abschnitt des Bandes opak ist.

5. Ein Hüllmaterial nach Anspruch 3 oder 4, bei der das Band farbig ist.

6. Ein Hüllmaterial nach einem der Ansprüche 3 bis 5, bei der das Band bedruckt ist.

7. Ein Hüllmaterial nach Anspruch 6, bei der das Band mit kennzeichnenden Buchstaben bedruckt ist.

8. Ein Hüllmaterial nach Anspruch 6, bei der das Band mit in Abständen angeordneten geometrischen Figuren bedruckt ist, deren Verformung während der Dehnung des Bandes beobachtet werden kann, um den Grad der Dehnung abzuschätzen.

9. Ein Hüllmaterial nach Anspruch 8, bei der die geometrischen Figuren Rechtecke sind.

10. Ein Hüllmaterial nach einem der vorangehenden Ansprüche, die weiterhin eine haftende Substanz umfaßt, die eine Haftung der Bänder auf der primären Folie fördert.

11. Eine Rolle elastischer Folie einer ersten Breite, die wenigstens ein Band einer verstärkenden Folie in diese hineingewickelt aufweist, wobei die Lage des Bandes in Bezug auf die Breite der primären Folie kontinuierlich über im wesentlichen die gesamte Breite der primären Folie variiert ist, so daß die zusammengefügte Rolle einen im wesentlichen einheitlichen Durchmesser aufweist.

12. Ein Verfahren zum Laminieren und Aufwickeln elastischer Folie mit einem Hilfsband, umfassend die Schritte des Führens wenigstens einer primären elastischen Folie, die eine erste Breite hat, von einem Folienursprung zu einer Aufnahmerolle und des gleichzeitigen Führens eines Hilfsfolienbandes, das eine zweite, im wesentlichen schmalere Breite als die erste hat, von einem Bandursprung zur Aufnahmerolle, so daß die primäre Folie und das Band zusammengewickelt werden, während das Band kontinuierlich über die Breite der primären Folie quer verschoben wird, um die Stärke des Bandes gleichmäßig über die Breite der gewickelten Folie zu verteilen.

## Revendications

1. Emballage étirable pour envelopper des palettes de boîtes empilées et autres, comprenant un film étirable primaire d'un calibre et d'une largeur latérale donnés, renforcé d'un film étirable secondaire, caractérisé par le fait que le film secondaire est pourvu d'au moins une bande auxiliaire ayant une largeur latérale inférieure à celle du film primaire et étant laminée sur celui-ci.

2. Emballage selon la revendication 1, dans lequel le matériau de bande a un calibre supérieur à celui du film primaire.

3. Emballage selon la revendication 1 ou la revendication 2, dans lequel le film primaire est transparent et le matériau de bande est visuellement différent du film primaire, afin de fournir une indication visuelle.

4. Emballage selon la revendication 3, dans lequel au moins une partie de la bande est opaque.

5. Emballage selon la revendication 3 ou la revendication 4, dans lequel la bande est colorée.

6. Emballage selon l'une quelconque des revendications 3 à 5,dans lequel la bande est imprimée.

7. Emballage selon la revendication 6, dans lequel la bande est imprimée avec des caractères d'identification.

8. Emballage selon la revendication 6, dans lequel la bande est imprimée avec des figures géométriques espacées dont la déformation peut être observée pendant l'étirage de la bande, afin d'estimer son degré d'allongement.

9. Emballage selon la revendication 8, dans lequel les figures géométriques sont des rectangles.

10. Emballage selon l'une quelconque des revendications précédentes, comprenant, en outre, une substance adhésive pour que les bandes favorisent l'adhérence au film primaire.

11. Rouleau de film étirable d'une première largeur, présentant au moins une bande de film de renforcement enroulée dans celui-ci, dans lequel la position de la bande, dans le sens de la largeur du film primaire, est modifiée en continu sur sensiblement toute la largeur du film primaire, de sorte que le rouleau composé ait un diamètre sensiblement uniforme.

12. Procédé de stratification et d'enroulement sur une bobine d'un film étirable avec une bande auxiliaire, comprenant les étapes consistant à passer au moins un film étirable primaire ayant une première largeur d'une source de film à une bobine réceptrice et à passer simultanément une bande de film auxiliaire ayant une seconde largeur sensiblement plus étroite que la première largeur d'une source de bande à une bobine réceptrice, de sorte que le film primaire et la bande sont enroulés ensemble, tout en déplaçant tranversalement en continu la bande sur la largeur du film primaire, de manière à répartir uniformément l'épaisseur de la bande sur la largeur du film enroulé sur une bobine.
